(19) **Europäisches Patentamt / European Patent Office / Office européen des brevets**

(11) **EP 1 970 850 A1**

(12) **EUROPEAN PATENT APPLICATION**

(43) Date of publication:
**17.09.2008 Bulletin 2008/38**

(51) Int Cl.:
*G06Q 30/00* *(2006.01)*

(21) Application number: **08101394.8**

(22) Date of filing: **07.02.2008**

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK RS** | (72) Inventors:<br>• **Peppers, Don**<br>  **Sea Island, 31561 (US)**<br>• **MacDonald, Jonathan**<br>  **Frimley, Surrey GU16 7AH (GB)** |
| (30) Priority: **12.03.2007 US 906366 P**<br>      **22.06.2007 GB 0712280** | (74) Representative: **McCann, Heather Alison et al**<br>**EIP**<br>**Fairfax House**<br>**15 Fulwood Place**<br>**London WC1V 6HU (GB)** |
| (71) Applicant: **Cvon Innovations Ltd**<br>**22 Ganton Street**<br>**London W1F 7BY (GB)** | <u>Remarks:</u><br>Amended claims in accordance with Rule 137(2) EPC. |

(54) **Dynamic message allocation system and method**

(57)     Method and system for enabling information providers to deliver messages to recipients in which a plurality of tiers of available messages are defined, each tier containing a number of messages, wherein a lowest tier has the highest number of messages and a highest tier has the fewest messages, and messages are allocated to information providers based on availability starting from a lowest tier with unallocated messages and progressing to higher tiers as the lower tiers fill up.

FIG. 3

**Description**

Field of Invention

The present invention relates generally to a system and method for managing delivery of messages to recipients and more particularly to a system and method for managing delivery of various types of messages to recipients' telecommunications devices.

Background of the Invention

Currently, it is possible for recipients to receive mobile telecommunications services at below market prices in exchange for receiving and interacting with advertisements directed to the recipients' mobile telecommunications devices. There are also operators in the global market offering such mobile telecommunications services free of charge when a recipient elects to receive and possibly interact with paid advertisements. This is often referred to as mobile marketing.

Mobile marketing is considered by information providers as the next new channel to directly reach recipients since it utilizes core assets and characteristics of the mobile media. Specifically, it is personal in that it is directed solely to individual recipients, it is "always on", can reach the recipients whenever they access their communications devices and wherever they are, and it is mobile. Moreover, mobile marketing often results in the formation of groups of people who communicate actively with each other. It is now envisioned that these characteristics combined with social network-based approaches of the Internet could form a very powerful base to execute marketing and advertising strategies.

In a typical mobile marketing or advertising arrangement, there is a set of recipients with certain profiles. These are target recipients for the advertisements, forming a target audience or target profile group. In a typical business arrangement, an information provider selects the target audience to which the advertisement is to be delivered using a web-based tool or interface (with preferred profiles). The mobile marketing messages or advertisements are delivered to recipients in the target profile group using one or more mobile communication networks.

Summary of the Invention

In accordance with at least one embodiment of the invention, methods, systems and software are provided for supporting or implementing functionality to allocate messages to a plurality of tiers of messages, as specified in the independent claims. This is achieved by a combination of features recited in each independent claim. Accordingly, dependent claims prescribe further detailed implementations of the present invention.

A first embodiment of a method for delivering messages, for example to recipients, in accordance with the invention includes defining a plurality of tiers of available messages, each tier containing an available inventory of messages, wherein a lowest tier has a highest inventory of messages and the available inventory is a minimum at a highest tier, and allocating messages to information providers based on availability starting from a lowest tier with unallocated messages and progressing to higher tiers.

Embodiments of the invention are particularly suited to arrangements in which the messages are advertisements. The recipients can be segmented or partitioned into a plurality of target profile groups with a set of tiers being defined for each of the target profile groups. The allocation of advertisements in the tiers for each target profile group is ideally set independent of another target group. The message allocation may be set according to specified delivery priority and/or supply and demand of advertisements for each target profile group.

Formation of the tiers and number of allocated advertisements for each tier may be obtained by first determining the total number of available advertisements, possibly in consideration of the number of advertisements permitted to be delivered to each recipient in a given period of time, the total number of recipients and a predetermined time period. Then, a percentage of the overall advertisement inventory is assigned to each tier, and the number of advertisements in each tier is obtained by multiplying the percentage by the total amount of available advertisements.

Another embodiment provides a user interface for a message management system which enables an information provider to reserve an amount of message inventory in association with a message delivery campaign, the user interface comprising:

    means for enabling an information provider to input messages associated with a message delivery campaign;
    means for enabling the information provider to select a target profile group of recipients to receive messages;
    means for enabling the information provider to select one or more parameters relating to the time of delivery of messages;
    means for displaying a plurality of message delivery tiers, each said message delivery tier having a message allocation associated therewith; and
    means for enabling the information provider to effect distribution of messages based on message delivery tier availability and thereby reserve an amount of message inventory based on message delivery tier availability and a desired number of messages associated with said message delivery campaign.

The user interface is supported by a message management system for use in reserving an amount of message inventory in association with a message delivery campaign; in one arrangement the message management system is configured to receive messages associated with a message delivery campaign; data indicative of a target profile group of recipients of said messages; and data indicative of one or more parameters relating to the time of delivery of said messages. These data can be received from the interface described above, causing the system to allocate said messages to one of a plurality of message delivery tiers on the basis of message delivery tier availability, each said message delivery tier having a message allocation associated therewith, and thereby reserve an amount of message inventory based on message delivery tier availability and a desired number of messages associated with said message delivery campaign.

Each tier can be associated with one or more carriers (e.g. operators of mobile networks), with message types (e.g. sending the message as WAP, SMS, MMS etc.), with priority for delivery of messages, with respective delivery times; or with cost to the information provider of delivery of messages. Other possibilities are envisaged, and the "cost" can be quantified in terms of resource usage - i.e. usage of network resources of a given carrier - or in terms of money.

The interface may be a user-friendly interface designed to enable each information provider to create their own advertising campaign. The interface enables the information providers to, among other things, select a target profile group of recipients to receive advertisements, select one or more parameters relating to the time of delivery of advertisements, and perform either a message delivery campaign based on a total amount of money to be spent or on delivery of a desired number of advertisements. When an information provider elects to perform a message delivery campaign based on delivery of a desired number of advertisements, the message management system is arranged to allocate, to each information provider, available advertisements from a lowest one of the tiers having unallocated advertisements, and then provide the cost of the advertisements to the information provider via the interface. On the other hand, when an information provider elects to perform a message delivery campaign based on a total amount of money to be spent, the message management system is arranged to allocate, to each information provider, available advertisements from a lowest one of the tiers having unallocated advertisements until the cost of the advertisements equals the budget, and then provide the number of allocated advertisements to the information provider via the interface.

One exemplary embodiment of a system for enabling information providers to deliver content to recipients in accordance with the invention includes a message management system having a defined plurality of tiers as described above. In one embodiment, infrastructure is coupled to the message management system to enable delivery of advertisements from the information providers entered via the interface in accordance with the allocation of such advertisements. The infrastructure may be capable of delivering the advertisements to the recipients' telecommunications devices.

Another exemplary embodiment of a system for delivering advertisements in accordance with the invention includes means for defining a plurality of tiers of available messages such as advertisements, each tier containing a number of messages, wherein a lowest tier has the highest number of available messages and the number of available messages decreases to a minimum at a highest tier, and means for allocating messages to information providers based on availability starting from a lowest tier with unallocated messages and progressing to higher tiers. Additional features of this system are described above in connection with the description of methods and other systems in accordance with the invention.

An exemplary database for use in a message delivery system in accordance with the invention includes content such as messages obtained from information providers, scheduling information relating to delivery priority specifying when the information providers want their messages delivered, profile information relating to target profile groups to whom the information providers want their messages delivered, and pricing information relating to prices paid for delivering of messages. The database can also include other information, such as used in any of the methods and systems described above, for example, delivery information relating to the manner in which the messages are to be delivered.

Brief Description of the Drawings

The invention, together with further objects and advantages thereof, may best be understood by reference to the following description taken in conjunction with the accompanying drawings, wherein like reference numerals identify like elements, and wherein:

FIG. 1 is a schematic of an exemplifying architecture of an advertisement management system in accordance with the invention.
FIG. 2 shows an example of screen shots of an Internet interface which can be used to define a message delivery campaign in accordance with the invention.
FIG. 3 shows examples of screen shots for three different message delivery campaigns in accordance with the invention.

FIG. 4 shows an example of a screen shot of a budget-based message delivery campaign using the advertisement management system and method in accordance with the invention.

Detailed Description of the Invention

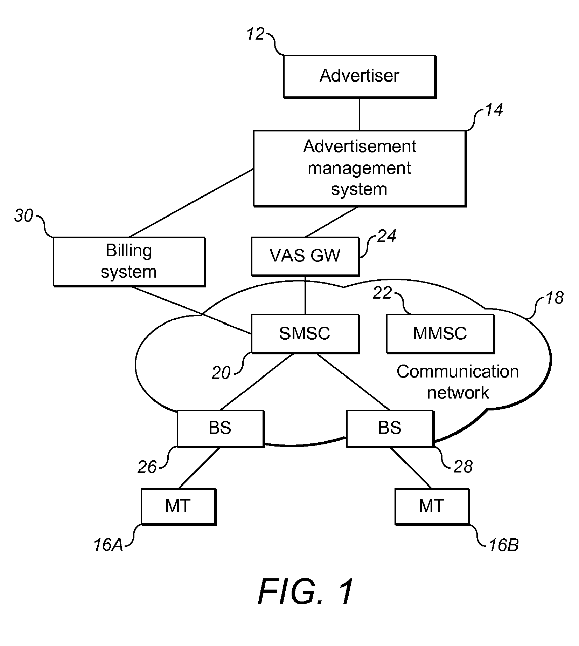

Referring to the accompanying drawings wherein the same reference numerals refer to the same or similar elements, FIG. 1 shows an architecture of an exemplary embodiment of a mobile messaging system in accordance with the invention which is designated generally as 10. The system 10 includes one or more information providers 12, defined to include any and all entities or individuals that want to advertise products or services to customers participating in the mobile messaging arrangement, and a message management system 14 that is operated by, for example, an advertising delivery company. Typically, the operator of the message management system 14 is a company in the business of delivering advertisements from several information providers, i.e., it is the intermediary between information providers and the operators of the advertisement distribution channels. Operation of the message management system 14 is typically managed over an Internet-interface.

The management system 14 may include tools for an information provider 12 to define parameters of their message delivery campaign, i.e., in the case of advertisements, to enable them to tailor the message delivery campaign to their specific desires. Parameters which can be defined include the target audience and the demographics thereof, the cost per message, the type of message, the total amount of money to be spent on the message delivery campaign, the total number of messages to be delivered during a message delivery campaign, the sociological background of the target audience, age, sex, target phone type, income level etc. In addition to determining the parameters, each information provider 12 typically provides one or more actual advertisements in any available form such as html-documents, links, text, pictures, audio, video, television content, videos, HTML, xHTML, WAP pages, web pages, etc., or any digital content compatible for reception and display by the target recipients' mobile communication device or terminal 16A, 16B.

In a typical cellular infrastructure 18, such as GSM, WCDMA and CDMA, there are several methods for delivering content to recipients with mobile terminals 16A, 16B. The methods can include, but are not limited to, short message service (SMS) delivered via SMSC 20 (Short message service center), multimedia message service (MMS) delivered via MMSC 22 (MMS center), instant messaging (IM), electronic mail, wireless application protocol gateway (WAP GW), and Internet access point (Internet AP). In addition, advertisements can be delivered over local area networks such as a Wireless Local Area Network (WLAN), BlueTooth (BT) or over other networks such as WiMax, broadcast networks such as DMB, DVB-H, ISDB-T or broadcasting over cellular networks using standards such as MBMS (Multicast Broadcast Multimedia Service), among others.

Typically, advertisements are delivered from the message management system 14 to the cellular infrastructure 18 and then from the cellular infrastructure 18 to the terminals 16A, 16B via elements such as a Value Added GateWay (VAS GW) 24, SMSC 20, Basestations 26, 28. The mobile terminals 16A, 16B can be cellular phones, Personal Digital Assistants (PDA), personal computers (PC), multimedia computers etc. The mobile messaging system 10 may include a billing system 30 which is normally used to invoice mobile customers for usage of communication services such as messaging, data connection, voice calls, video calls etc.

The prioritising model for a mobile messaging system 10 in accordance with the invention depends on several factors. One factor is the total number of available inventory items, i.e., the total number of advertisements that can be delivered to the participating recipients (those recipients who have elected to receive advertisements in exchange for free or discounted telecommunications services) as well as possibly to other recipients who do not obtain any benefit from receiving the advertisements. The total number of available inventory items is determined by multiplying the total number of participating recipients (C) by the number of advertisements which can be sent to them (M) per defined advertising time period (dt) (M/dt). Multiplying this product by an allocated period of time to deliver the advertisements (t) results in the total number of advertisements TM that can be delivered in this allocated period of time. Thus:

$$TM = C \ \times \ \frac{M}{dt} \ \times \ t$$

For example, for 10,000 recipients who have agreed to receive a maximum of 4 advertisements per day, then for a seven-day advertising period, the total number of advertisements available to the system to allocate to one or more information providers for delivery to these recipients is 280,000.

As the set of recipients (C) is segmented according to set profiles (such as gender, age, zip code, interest, etc.), the target group size is $N_i$, where i is the index corresponding to the profiled target group. A recipient may simultaneously be a member of a plurality of target groups, e.g., a female living in California belongs at least to at least the following three groups: females (i=1 Californians (i=2); and females in California (i=3). As such, the total number of advertisements (maximum inventory per group) which can be sent to each profiled target group i is then:

$$TM_i = N_i \ x \ \frac{M}{dt} \ x \ t$$

In practice, there may be multiple, different parameters which can be set as profile information resulting in a very large number of combinations of target profile groups. For example, if there are 10 on/off criteria for the recipients, there would actually be $2^{10}$ different possible combinations of these criteria. There are at least two methods to defining target profile groups, either define all possible groups $TM_i$ where i=1...$2^{10}$ or alternatively, form groups "on the fly" as the information provider defines profiles.

The inventory level of available advertisements for the target profile groups decreases as advertisements are sent during an allocated advertising period and as message delivery campaigns are reserved if there are recipients which belong to two or more target profile groups.

For example, assuming there are these three groups, a first group defined i=1 corresponding to the selection of females, a second group defined i=2 corresponding on the selection of people living in California, and a third group defined i=3 corresponding to females living in California. Further assuming that, for example, 50% of the customers are females and 20% of all target customers are living in California. When an information provider wants to send $y_1$ advertisements to the third group i=3, the available inventory of advertisements (available for allocation to other information providers) for that target profile group will be reduced:

$$TM_3 = TM_3 - y_1$$

Since the first and second groups, i=1 and i=2, overlap with the third group, i=3, the allocation of advertisements for the third group, i=3, $TM_3$, inherently influences the inventory levels of the first and second groups, i=1 and i=2, as follows:

$$TM_1 = TM_1 - y_1$$

$$TM_2 = TM_2 - y_1$$

thereby reducing the inventory level of available advertisements for all female customers (the first group) whether they live in California or not and reducing the inventory level of available advertisements for people living in California (the second group) whether they are female or male.

Now, if a subsequent information provider wants to obtain an allocation of $y_2$ advertisements for the second group, i=2, the available inventory after the allocation is:

$$TM_2 = TM_2 - y_2$$

that is, the total of available advertisements (available for allocation to information providers once an amount equal to $y_1$ or $y_2$ has been allocated) is the initial inventory less $y_1 + y_2$. Since the group of people living in California (i=2) overlaps with the group of females living in California (i=3) and the group of females (i=1), the inventory levels of the first and third groups i=1 and i=3 are reduced as follows:

$$TM_1 = TM_1 - y_2 \ x \ 0.5$$

$$TM_3 = TM_3\text{-}y_2 \times 0.5$$

that is, the inventory level of available advertisements for the group of females (i=1) is reduced by the determined weight (50% in this case based on the assumption that 50% of the population in California is female).

Furthermore, when another information provider wants to send y3 advertisements to the first group, i=1, i.e., the target profile group of females, the inventory levels of available advertisements for the three groups will be adjusted as follows:

$$TM_1 = TM_1 - y3$$

$$TM_2 = TM_2 - y_3 \times 0.2$$

$$TM_3 = TM_3 - y_3 \times 0.2$$

(the reduction in available advertisements for the second and third groups being related to a predetermined weight of female customers living in California, in this case, 20%).

After the allocations for these three information providers, the initial inventory levels are thus reduced as follows:

the first group, i=1, by $y_3 + y_2 \times 0.5 + y_1$
the second group, i=2, by $y_3 \times 0.2 + y_2 + y_1$; and
the third group, i=3, by $y_3 \times 0.2 + y_2 \times 0.5 + y_1$

The party operating the message management system 14 (and in some instances the communication network as well), i.e., the party in the business of offering advertisement delivery services, creates an interface to the message management system 14 which can be used to define at least the following:

M    number of messages which can be sent during a set period of time, for example 1 day.
dt    the time period, such as one day
t    the advertising period, for example 90 days.

Other operational parameters to enable use of the message management system 14 via the interface can also be defined including, for example, the number of tiers which are used in the organization of the management system 14, the base price and associated delivery priority for sending an advertisement to a participating recipient, inventory levels for each tier which affect increases in the delivery priority for sending an advertisement, and the increase in the delivery priority for each tier.

Use of different tiers in the message management system 14, and the attendant allocation of available inventory of advertisements into the tiers, determines the priority associated with messages delivered according to the overall message delivery campaign (when conducting a message delivery campaign based on a set number of advertisements) and also determines the number of advertisements in the message delivery campaign (when conducting a budget-based message delivery campaign).

The number of tiers may be freely selected and in an example below, there are three tiers. However, there may be fewer than three tiers, such as two tiers, or more than three tiers, such as four tiers, five tiers, and up. The determination of how many tiers to provide in the message management system 14 depends on several factors, with more tiers resulting in a wider range of prices for the advertisements and more ranges of inventory levels.

Referring now to Table 1 (below), an example of the partitioning of available inventory of a total number of advertisements of a target profile group, $TM_i$, is shown. The total number of advertisements that can be delivered to the target profile group is 100,000. The base priority (tier 3) is associated with delivery priority "low" meaning that messages are to be delivered when there is available capacity in the network - e.g. during periods in which the loading on the network is low. The priority for tier 2 is selected to be delivery with priority "medium" meaning that messages are to be delivered within a predetermined time frame such as on particular days of a message delivery campaign, but where the delivery is unspecific as to the time of day in which the delivery will occur per advertisement. The priority for tier 1 is selected to be delivery with priority "high", meaning that messages are delivered at a scheduled time within a message delivery campaign. It will be appreciated that there is a price associated with delivery of messages at the varying priority levels; in the arrangements the price/message associated with tier 3 is $0.05 per message, that associated with tier 2 is $0.1 per message, and that associated with tier 1 is $0.2 per message.

The inventory fill level for tier 3 is selected to be 0-50% corresponding to a maximum number of available advertisements of 50,000 (50% of the total number of messages which is 100,000). The inventory fill level for tier 2 is selected to be 50-80% corresponding to a maximum number of available advertisements of 30,000 (30% of the total number of messages which is 100,000). The inventory fill level for tier 1 is selected to be 80-100% corresponding to a maximum number of available advertisements of 20,000 (20% of the total number of messages which is 100,000).

TABLE 1

| Tier | Delivery Priority | Price | Inventory fill level % | Number of available messages |
|---|---|---|---|---|
| 1 | Deliver immediately | $0.2/message (4x base price) | 80%-100% | 20 000 |
| 2 | Medium priority: Specified time window | $0.1/message (2x base price) | 50%-80% | 30000 |
| 3 | Base priority delivery (e.g. when load on network is low) | $0.05/message (base price) | 0%-50% | 50000 |

The message management system 14 can automatically calculate for the system operator the potential revenue once the operational parameters are set. Thus, for the example of the messaging system having the operational parameters set forth in Table 1, the maximum potential revenue is $0.20x20,000 + $0.10x30,000 + $0.05x50,000 = $9,500. Since the inventory fill level is a settable operational parameter, along with the base price and prices for each tier, the operator can freely select these parameters in order to manage supply and demand of the advertisement inventory, and maximize or optimize the potential revenue.

In one embodiment of the invention, it is envisioned that the operator of the message management system 14 would define windows when tiers will be opened (available) for allocating the advertisements, i.e., for example, a block of available advertisements can be made available for a 90 day period every 90 days. As each period begins, the information providers can start making requests for the available advertisements in the inventory. In this manner, there is advantage for information providers who are the first to reserve use or obtain an allocation of available advertisements in contrast to information providers who reserve use or obtain an allocation of available advertisements later as the supply-demand pricing generated with the innovative system will cause an increase in the price.

In preferred arrangements the information providers are able to specify delivery priority in terms of time window or similar in addition to price; the message management system 14 can then use the time window delivery preference information to move already allocated advertisements between tiers or to modify the schedule for delivery within a given tier. For example, assume that the entire available inventory in tier 2 has been allocated for delivery of Al's messages in relation to a certain campaign C1, which spans Sunday to Thursday of week 27. Further assume that at least some of Al's already allocated messages have a temporal delivery preference of "deliver sometime Sunday to Saturday of week 27" and that these messages had been allocated to tier 2 and campaign C1 because there was capacity available in tier 2 in relation to a day falling within the schedule for C 1 at the time the request for allocation had been received from A1. Such messages could be moved to tier 2 for delivery on a day other than falling within campaign C1 but that is nevertheless week 27 - for example for delivery on Friday or Saturday of week 27 - thereby freeing up some message inventory in tier 2 for allocating to an information provider A2 that needs to transmit messages sometime on Wednesday of week 27. Assuming there to be a second campaign C2 that starts on the Friday, A1's messages could be moved to tier 2 (or even tier 3) of campaign C2, thereby freeing up some inventory for provider A2. Since the cost associated with messages allocated to tier 2 is less than the cost associated with messages allocated to tier 1, this kind of schedule rearrangement is preferably to simply allocating the newly received request from A2 to a higher tier (in this case tier 1) for campaign C1.

Of course there will be occasions in which the information provider actively specifies a higher tier and thus incurs a higher price for message delivery, in which case advertisements from the inventory corresponding to the tier having the specified priority will be allocated to the information providers.

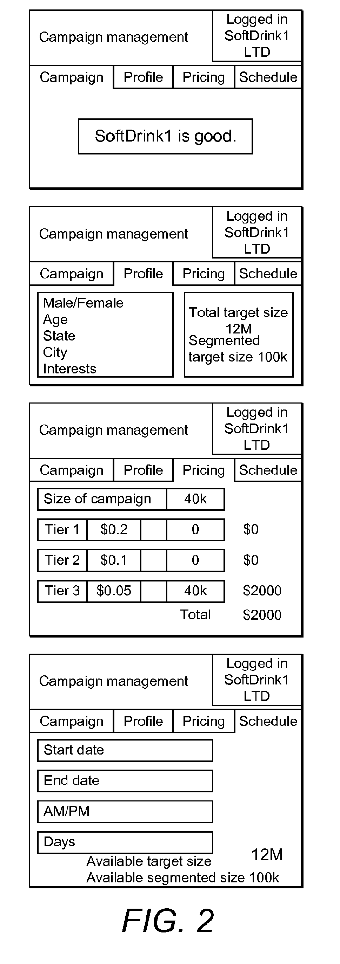

As mentioned above, there is an interface for an information provider to access the message management system 14 and build a message delivery campaign by themselves without requiring involvement with the operator of the message management system 14. FIG. 2 shows an exemplifying interface for an information provider designated "SoftDrink1 Ltd".

Initially, to access the message management system 14, the information provider is preferably required to register and then log in via the secured web interface. The interface provides variable fields designed to be modified by the information provider in accordance with whatever parameters they want for their message delivery campaign.

Although the organization of the interface is exemplary only and not intended to limit the invention, four variable fields are shown as tabs, i.e., Campaign, Profile, Pricing and Schedule, all under the heading Campaign management and an indication of the logged-in status of the information provider. Using the "Campaign" tab, actual campaign content can be provided to the message management system, i.e., uploaded via an internet connection. The example here is a text-based campaign slogan: "SoftDrink1 is good." As such, the campaign slogan can be delivered to participating recipients for example via SMS or MMS. Although not shown, the delivery techniques available to deliver advertisements entered in the campaign field are also parameters selectable by the information provider using the interface.

Using the "Profile" tab, an information provider is able select one or more target profile groups of preferred recipients of the advertisements. The actual, available profile groups can be predetermined by the operator of the message management system 14. Profile groups can be defined according to, for example but not limited to, age, gender, location including state or city, interests, etc. and combinations thereof, so that, for example, an information provider can select as the recipients of their advertisements only females between the ages of 18 and 21. To enable profiling of the participating recipients, the recipients should preferably be required to provide data about themselves to enable formation of different profile groups.

An information provider is not required to select one or more of the target profile groups, in which case, the advertisements will be directed to all participating recipients.

Once an information provider selects its target profile group, the appropriate portion of the total number of participating recipients designated to potentially receive that information provider's advertisements will be calculated along with the total number of advertisements that can be delivered to these recipients. For example, a target profile group selected by an information provider may be calculated to contain 25,000 recipients each of whom has agreed to accept 4 advertisements per day so that a daily maximum inventory is 100,000 advertisements. Both the entire target size TM and the segmented target size, or the number of recipients having the selected target profile, $TM_i$, can be displayed when determining the target profile.

The "Schedule" tab of the interface can be used to select when the advertisements entered using the "Campaign" tab are to be delivered to selected target profile group(s), determined using the "Profile" tab. Selectable parameters for the schedule include a start date on which the advertisements will begin to be delivered to recipients in the target group, an end date by which all of the advertisements will already have been sent to the recipients in the target group, preferred days of the week to send the advertisements, and preferred time or times of the day to send the advertisements. Both the entire available target size, TM, and the segmented available target size, $TM_i$, can be displayed when determining the scheduling parameters.

The "Pricing" tab of the interface enables an information provider to create a message delivery campaign based either on the total number of advertisements to be sent to the target profile group or based upon the total cost of the message delivery campaign. Both variations utilize the innovative tier-based pricing and advertisement-allocation structure described herein.

The "Pricing" tab shows the different tiers and prices for available advertisements in each tier. These prices can and often do vary as a function of the target profile group so that a highly popular target profile group has higher prices than a less popular target profile group.

An example is described below wherein three information providers use the message management system 14 for message delivery campaigns based on the delivery of desired numbers of advertisements.

As shown in FIG. 2, a first information provider enters a number of the advertisements to be delivered in a given period of time, in this case 40,000, in an area or field designated for the size of the campaign. The price for delivery of these 40,000 advertisements depends on the number of available advertisements in the inventory, i.e., in each tier of the inventory. Since this information provider is the first to schedule delivery of advertisements using the message management system 14, and assuming no specific delivery requirements, all 40,000 advertisements can be allocated to tier 3, the tier with the lowest price, since the desired number of advertisements (40,000) is less than the number of available advertisements in tier 3 (50,000). Tier 3 will still contain 10,000 available advertisements after the first information provider is allocated its 40,000 desired advertisements. Since the price for each advertisement in tier 3 is $0.05, the cost of SoftDrink1 Ltd.'s message delivery campaign is 40,000x$0.05=$2000.

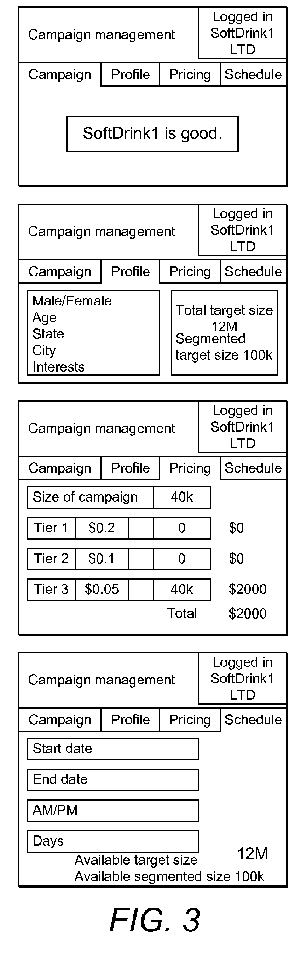

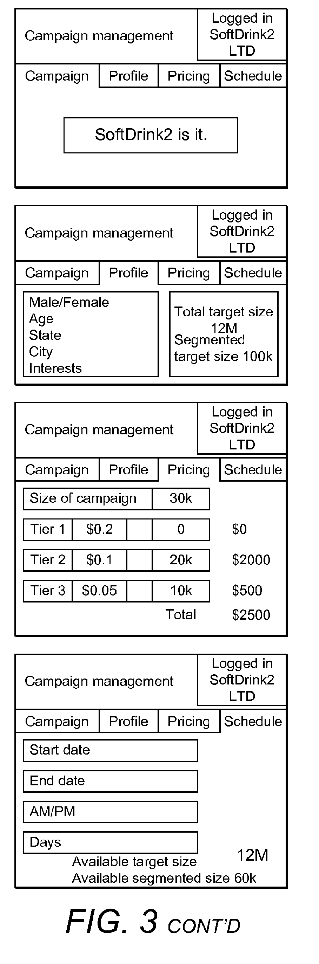

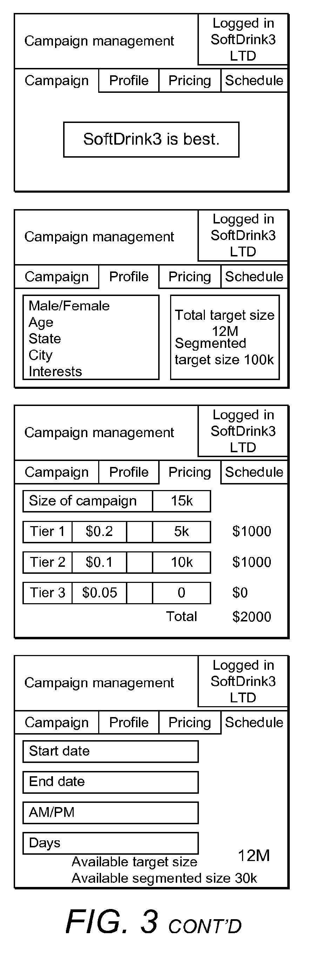

The second information provider, SoftDrink2 Ltd., and the third information provider, Softdrink3 Ltd., are also desirous to advertise to the same target profile group as the first information provider. FIG. 3 shows the reservation flow diagrams for all three information providers. The first column showing the reservation flow diagrams for the first information provider Softdrink1 Ltd., which are basically the same as those shown in FIG. 2, but are repeated for easy reference for the explanation of the flow diagrams for the second and third information providers, Softdrink2, Ltd. and Softdrink3, Ltd.,

in the second and third columns, respectively

Once SoftDrink1 Ltd. has reserved 40,000 advertisements of the initially available total inventory of 100,000, the remaining inventory for the target profile group includes only 60,000 possible advertisements. This is indicated to the next information provider who accesses the message management system 14 and selects the same target profile group, i.e., Softdrink2, Ltd. (see the schedule diagram at the bottom of the second column in FIG. 3 wherein the available segmented size is shown as being 60K).

As noted above, the operator of the message management system has allocated only 50,000 advertisements to tier 3 and since the first information provider has been allocated 40,000 advertisements, only 10,000 advertisements remain in tier 3 for allocation to other information providers. The second information provider, Softdrink2 Ltd., wants 30,000 advertisements (entered into the field "Size of campaign" under the "Pricing" tab) and, assuming no specific delivery requirements, can be allocated 10,000 from tier 3 and the 20,000 from tier 2, since the total number of available advertisements in tier 2 is 30,000. Since the price for each advertisement in tier 3 is $0.05 and the price for each advertisement in tier 2 is $0.10, the cost of SoftDrink2 Ltd.'s message delivery campaign is 10,000x$0.05 + 20,000x$0.10 = $2,500.

Once SoftDrink1 Ltd. and Softdrink2 Ltd. have reserved 70,000 advertisements of the initially available total inventory of 100,000, the remaining inventory for the target profile group includes only 30,000 possible advertisements. This is indicated to the next information provider to access the message management system 14 and select the same target profile group, i.e., Softdrink3, Ltd. (see the schedule diagram at the bottom of the third column in FIG. 3 wherein the available segmented size is shown as being 30K).

As noted above, the operator of the message management system has allocated 30,000 advertisements to tier 2 and since the second information provider has already been allocated 20,000 advertisements from tier 2, only 10,000 advertisements remain in tier 2 for future allocation. The third information provider, Softdrink3 Ltd., has requested 15,000 advertisements and therefore can be allocated 10,000 from tier 2 and the remaining 5,000 from tier 1. Since the price for each advertisement in tier 2 is $0.10 and the price for each advertisement in tier 1 is $0.20, the cost of SoftDrink3 Ltd.'s message delivery campaign is 10,000x$0.10 + 5,000x$0.20 = $2,000.

After all of these information providers have entered their information relating to their message delivery campaigns, tier 1 will still contain 15,000 available advertisements for allocation to other information providers. It should be noted that some operational parameters of the message management system 14 do not have to be displayed to the information providers. For example, it might not be desirous to display the composition of the inventory fill levels and number of available messages to the information providers.

The interface of the message management system 14 also enables information providers to create message delivery campaigns based on a budget, in contrast to determining the number of advertisements as in the example explained above with reference to FIGS. 2 and 3. Aside from a difference in the pricing portion of the interface, the other portions of the interface, i.e., Campaign, Profile and Schedule, are used in the same manner as for numeric-based message delivery campaigns. The difference is that instead of an indication of a field to allow for entry of the size of the campaign, the field allows for entry of the budget of the campaign.

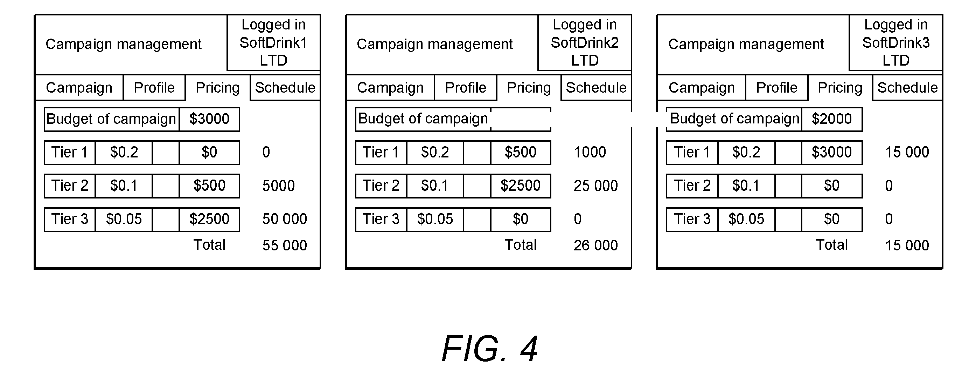

FIG. 4 shows an example of the pricing portions of the interface for budget-based message delivery campaigns using the message management system in accordance with the invention. Each information provider has a budget of $3,000 for its campaign and the sequence of using the interface is the same as in the above example, i.e., first Softdrink1, Ltd., then Softdrink2, Ltd. and then Softdrink3, Ltd.

The first information provider, Softdrink1, Ltd., enters the budgeted amount of $3,000 for its campaign and the interface automatically allocates the number of advertisements in each tier it can receive for that budget. Assuming as specific delivery constraints, filling of the tiers begins from the lowest priced tier, in this case, tier 3, and proceeds upward to tier 1. For its budgeted amount of $3,000, the first information provider is able to receive an allocation of 50,000 advertisements from tier 3, the entire tier 3 allocation, and an allocation of 5,000 advertisements from tier 2 (for a total of 55,000 advertisements). For its budgeted amount of $3,000, the second information provider is able to receive an allocation of 25,000 advertisements from tier 2, the remaining allocation of advertisements in tier 2, and an allocation of 1,000 advertisements from tier 1 (for a total of 26,000 advertisements). For its budgeted amount of $3,000, the third information provider is able to receive an allocation of 15,000 advertisements from tier 1. Tier 1 will still contain 5,000 available advertisements for allocation to other, later-reserving information providers.

The interface described above is highly user-friendly since each information provider can, at their own initiative, adjust the size of their campaign and the priority they require for message delivery to obtain an acceptable cost, when a numeric-based message delivery campaign is being created, or alternatively, can adjust the price of their campaign to obtain an acceptable number of advertisements, when a budget-based campaign is being created. The messaging system can automatically calculate the delivery schedule and total price for different numbers of advertisements when creating a numeric-based message delivery campaign and can also automatically calculate the number of advertisements that can be obtained for a fixed price when creating a budget-based message delivery campaign. This allows the information providers to independently, without assistance from the operator of the message management system 14, optimize their message delivery campaigns.

Moreover, as described above, since pricing can be a factor of the selected target profile, the manner in which the advertisements are being delivered to the recipients and/or the schedule, the information providers can freely change any of the target profile, delivery methods and schedule to obtain an optimum or acceptable message delivery campaign, all using the computer interface. Assistance by the operator of the message management system 14 should not be required, or only minimal.

The foregoing invention therefore provides a new and improved mobile messaging arrangement and method wherein information providers are able to direct their content to recipients in one or more specific target profile groups, thereby performing segmentation, at fixed prices for delivery of content such as advertisements, i.e., without requiring a higher price for the selection of specific target profile groups. Thus, some embodiments of the mobile messaging arrangement and method have independent pricing for advertising to each of a plurality of different target profile groups. The pricing of each target profile group is performed according to supply and demand irrespective of the pricing for any other target profile group.

In addition or as an alternative to using delivery time and/or resource usage and/or cost of message delivery to allocate messages to a respective tier, messages can be allocated to tiers on the basis of the identity of the mobile network operator with which recipients are associated. Information providers such as advertisers can then utilise the user interface to specify or select operators in association with a given tier, and thereby control the tier to which messages are allocated and thence delivery of messages to recipients. Furthermore, the tiers could be associated with a particular type of message, that is to say that the message management system could comprise means for creating messages based on the content provided by the information provider, and packaging the content into particular types of messages based on the tier specified by the information provider via the interface. The types of messages could be SMS, MMS, WAP, email and the like.

Having described exemplary embodiments of the invention with reference to the accompanying drawings, it will be appreciated that the present invention is not limited to those embodiments, and that various changes and modifications can be effected therein by one of ordinary skill in the art without departing from the scope or spirit of the invention as defined by the appended claims.

Clauses

A user interface for a message management system which enables an information provider to reserve an amount of message inventory in association with a message delivery campaign, the user interface comprising:

> means for enabling an information provider to input messages associated with a message delivery campaign;
> means for enabling the information provider to select a target profile group of recipients to receive messages;
> means for enabling the information provider to select one or more parameters relating to the time of delivery of messages;
> means for displaying a plurality of message delivery tiers, each said message delivery tier having a message allocation associated therewith; and
> means for enabling the information provider to effect distribution of messages based on message delivery tier availability and thereby reserve an amount of message inventory based on message delivery tier availability and a desired number of messages associated with said message delivery campaign.

The above user interface, wherein each said message delivery tier has a time of delivery associated therewith, and the user interface is arranged to output an effected distribution of messages for use in generating a message delivery schedule.

The above user interface, wherein a lowest tier has the lowest delivery priority and the delivery priority increases to a maximum at a highest tier, the interface further comprising means for automatically obtaining an allocation of messages based on availability starting from a lowest message delivery tier with unallocated messages and progressing to higher message delivery tiers.

The above user interface, wherein the recipients are partitioned into a plurality of target profile groups and a set of a plurality of message delivery tiers is defined for each of the target profile groups, the allocation of messages in the message delivery tiers for each target profile group being independent of one another.

The above user interface, wherein the means for enabling the information provider to create a message delivery inventory based on delivery of a desired number of messages comprises a field for entry of the desired number of messages, further comprising means for displaying cost of the messages to the information provider.

The above user interface, wherein the means for enabling the information provider to select one or more parameters relating to the time of delivery of messages comprises means for selecting a priority for delivery of said messages.

A message management system for use in reserving an amount of message inventory in association with a message delivery campaign, the message management system comprising:

an interface for receiving messages associated with a message delivery campaign;
an interface for receiving data indicative of a target profile group of recipients of said messages;
an interface for receiving data indicative of one or more parameters relating to the time of delivery of said messages,

wherein the system is arranged to allocate said messages to one of a plurality of message delivery tiers on the basis of message delivery tier availability, each said message delivery tier having a message allocation associated therewith, and thereby reserve an amount of message inventory based on message delivery tier availability and a desired number of messages associated with said message delivery campaign.

The above message management system, wherein at least some said messages are delivered via one or more mobile communications networks and the system has access to subscriber records associated with operators of said mobile communications networks, wherein each said message delivery tier has at least one operator of a mobile communications network associated therewith and the message management system is arranged to allocate said messages to one of the plurality of message delivery tiers on the basis of the recipient identity and subscriber records associated therewith.

The above message management system, wherein each said message delivery tier has a time of delivery associated therewith, and the message management system is arranged to generate a message delivery schedule base thereon.

A method of reserving an amount of message inventory in association with a message delivery campaign, the method comprising:

receiving messages associated with a message delivery campaign;
receiving data indicative of a target profile group of recipients of said messages;
receiving data indicative of one or more parameters relating to the time of delivery of said messages; and
allocating said messages to one of a plurality of message delivery tiers on the basis of message delivery tier availability, each said message delivery tier having a message allocation associated therewith, whereby to reserve an amount of message inventory based on message delivery tier availability and a desired number of messages associated with said message delivery campaign.

The above method, wherein at least some said messages are delivered via one or more mobile communications networks, the method further comprising:

identifying recipients of said messages on the basis of the specified target group and data identifying attributes of potential message recipients; and
accessing subscriber records associated with operators of said mobile communications networks so as to determine operators associated with said identified recipients,

wherein each said message delivery tier has at least one operator of a mobile communications network associated therewith and the method further comprises allocating said messages to one of the plurality of message delivery tiers on the basis of the recipient identity and subscriber records associated therewith.

The above method, wherein at least some said message delivery tiers have a time of delivery associated therewith, and the method further comprises generating a message delivery schedule based thereon.

**Claims**

1. A method for allocating messages to one of a plurality of delivery slots for use in delivering said allocated messages within a communications network, the method comprising:

defining a plurality of tiers of available messages, each tier containing an available inventory of messages, wherein a lowest tier has a highest available inventory and a highest tier has a lowest available inventory, each said tier having a priority for use in scheduling the delivery of messages; and
allocating messages to information providers based on availability starting from a lowest tier with unallocated messages and progressing to higher tiers.

2. The method of claim 1, further comprising:

partitioning recipients of the messages into a plurality of target profile groups;
defining a set of a plurality of tiers for each of the target profile groups; and
allocating messages in the tiers for each target profile group independently of one another.

3. The method of claim 2, wherein the allocation of messages is performed according to supply and demand of messages for each target profile group.

4. The method of any one of the preceding claims, further comprising determining the total number of available messages in consideration of the number of messages permitted to be delivered to each recipient in a given period of time, a total number of recipients and a predetermined time period.

5. The method of any one of the preceding claims, further comprising assigning a percentage of a total message inventory to each tier, the available inventory of messages in each tier being determined by multiplying the percentage by the total amount of available messages.

6. The method of any one of the preceding claims, wherein the allocation of messages to information providers is enabled via an interface available to the information providers.

7. The method of claim 6, further comprising:

forming the interface to enable each information provider to at least one of:

enter a message to be delivered to recipients;
select a target profile group of recipients to receive messages;
select one or more parameters relating to the time of delivery of messages; and
perform either a message delivery campaign based on a budget or on delivery of a set number of messages.

8. The method of claim 7, wherein when an information provider elects to perform a message delivery campaign based on delivery of a set number of messages, further comprising:

allocating to each information provider, available messages from a lowest one of the tiers having unallocated messages, and then
providing the cost of the messages to the information provider.

9. The method of claim 7, wherein when an information provider elects to perform a message delivery campaign based on a budget, further comprising:

allocating to each information provider, available messages from a lowest one of the tiers having unallocated messages until the cost of the messages equals the budget, and then
providing the number of allocated messages to the information provider.

10. The method of claim 1, wherein the number of tiers is 2, 3, 4 or 5.

11. A method for delivering messages to recipients, comprising:

determining an available inventory of messages for a set period of time that can be delivered to the recipients' telecommunications devices;
defining a plurality of tiers of available messages, each tier containing a portion of the total number of messages,

wherein a lowest tier has a highest proportion of the available inventory and the proportion of the available inventory decreases to a minimum at a highest tier;
enabling information providers to obtain an allocation of messages based on availability starting from a lowest tier with unallocated messages and progressing to higher tiers; and
managing the reception of messages from the information providers and the delivery of the received messages to the recipients in accordance with the allocations of the information providers.

12. The method of claim 11, further comprising:

partitioning the recipients into a plurality of target profile groups;
defining a set of a plurality of tiers for each of the target profile groups; and
allocating the messages in the tiers for each target profile group independently of one another.

**13.** A system for enabling information providers to schedule delivery of messages, comprising:

a messaging management system having a defined plurality of tiers of available messages, each containing a number of messages, wherein a lowest tier has the highest number of available messages and the available messages decrease to a minimum at a highest tier, each said tier having a message delivery priority associated therewith; and
an interface to said message management system accessible by information providers to enable the information providers to input messages to said message management system and obtain an allocation of messages based on availability starting from a lowest tier with unallocated messages and progressing to higher tiers.

**14.** The system of claim 13, further comprising infrastructure coupled to said message management system to enable delivery of messages from the information providers entered via said interface in accordance with the allocation of such messages to recipients' telecommunications devices.

**15.** The system of claim 13 or claim 14, wherein the recipients are partitioned into a plurality of target profile groups and a set of a plurality of tiers is defined for each of the target profile groups, the allocation of messages in the tiers for each target profile group being independent of one another.

**16.** The system of any one of claim 13 to claim 15, wherein said message management system is arranged to determine the total number of available messages in consideration of the number of messages permitted to be delivered to each recipient in a given period of time, a specified delivery priority, the total number of recipients and a predetermined time period for the message delivery campaign.

**17.** The system of claim 16, wherein a percentage of message inventory is assigned to each tier by an operator of said message management system, the number of messages in each tier being determined by multiplying the percentage by the total amount of available messages.

**18.** The system of any one of claim 13 to claim 17, wherein said interface is formed to enable each information provider to at least one of:

select a target profile group of recipients to receive messages;
select one or more parameters relating to the time of delivery of messages; and
perform either a message delivery campaign based on a budget or on delivery of a desired number of messages.

**19.** The system of claim 18, wherein when an information provider elects to perform a message delivery campaign based on delivery of a desired number of messages, said message management system is arranged to allocate to each information provider, available messages from a lowest one of the tiers having unallocated messages, and then provide the cost of the messages to the information provider via said interface.

**20.** The system of claim 18, wherein when an information provider elects to perform a message delivery campaign based on a budget, said message management system is arranged to allocate to each information provider, available messages from a lowest one of the tiers having unallocated messages until the cost of the messages equals the budget, and then provide the number of allocated messages to the information provider via said interface.

**21.** The system of any one of claim 13 to claim 20, wherein the number of tiers is 2, 3, 4 or 5.

**22.** A computer program, or a suite of computer programs, comprising a set of instructions to cause a computer, or a suite of computers, to perform the method according to any one of claim 1 to claim 12.

**23.** A computer readable carrier comprising the computer program according to claim 22.

**Amended claims in accordance with Rule 137(2) EPC.**

**1.** A method for allocating messaging slots for use in delivering messages within a communications network (18), the method comprising:

defining a plurality of tiers of available messages, each tier containing an available inventory of messages, wherein a lowest tier has a highest available inventory and a highest tier has a lowest available inventory, each said tier having a priority for use in scheduling the delivery of messages; and
allocating messaging slots to information providers (12) based on availability starting from a lowest tier with unallocated messaging slots and progressing to higher tiers.

**2.** The method of claim 1, further comprising:

partitioning recipients of the messages into a plurality of target profile groups;
defining a set of a plurality of tiers for each of the target profile groups; and
allocating messages to said messaging slots in the tiers for each target profile group independently of one another.

**3.** The method of claim 2, wherein the allocation of messages is performed according to supply and demand of messages for each target profile group.

**4.** The method of any one of the preceding claims, further comprising determining the total number of available messages in consideration of the number of messages permitted to be delivered to each recipient in a given period of time, a total number of recipients and a predetermined time period.

**5.** The method of any one of the preceding claims, further comprising assigning a percentage of a total message inventory to each tier, the available inventory of messages in each tier being determined by multiplying the percentage by the total amount of available messages.

**6.** The method of any one of the preceding claims, wherein the allocation of messaging slots to information providers (12) is enabled via an interface available to the information providers (12).

**7.** The method of claim 6, further comprising:

forming the interface to enable each information provider (12) to at least one of:

enter a message to be delivered to recipients;
select a target profile group of recipients to receive messages;
select one or more parameters relating to the time of delivery of messages; and
perform either a message delivery campaign based on a budget or on delivery of a set number of messages.

**8.** The method of claim 7, wherein when an information provider (12) elects to perform a message delivery campaign based on delivery of a set number of messages, further comprising:

allocating to each information provider (12) available messaging slots from a lowest one of the tiers having unallocated messaging slots, and then
providing the cost of utilising the messaging slots to the information provider (12).

**9.** The method of claim 7, wherein when an information provider (12) elects to perform a message delivery campaign based on a budget, further comprising:

allocating to each information provider (12), available messaging slots from a lowest one of the tiers having unallocated messaging slots until the cost of utilising the messaging slots equals the budget, and then
providing the number of allocated messaging slots to the information provider (12).

**10.** The method of claim 1, wherein the number of tiers is 2, 3, 4 or 5.

**11.** A method for delivering messages to recipients, comprising:

determining an available inventory of messages for a set period of time that can be delivered to the recipients' telecommunications devices (16A, 16B);

defining a plurality of tiers of available messages, each tier containing a portion of the total number of messages, wherein a lowest tier has a highest proportion of the available inventory and the proportion of the available inventory decreases to a minimum at a highest tier;

enabling information providers (12) to obtain an allocation of messaging slots for delivery of messages based on availability starting from a lowest tier with unallocated messaging slots and progressing to higher tiers; and

managing the reception of messages from the information providers (12) and the delivery of the received messages to the recipients in accordance with the allocations of the messaging slots to the information providers (12).

**12.** The method of claim 11, further comprising:

partitioning the recipients into a plurality of target profile groups;

defining a set of a plurality of tiers for each of the target profile groups; and

allocating the messages in the tiers for each target profile group independently of one another.

**13.** A system for enabling information providers to schedule delivery of messages, comprising:

a messaging management system (14) having a defined plurality of tiers of available messages, each containing a number of messages, wherein a lowest tier has the highest number of available messages and the available messages decrease to a minimum at a highest tier, each said tier having a message delivery priority associated therewith; and

an interface to said message management system (14) accessible by information providers (12) to enable the information providers (12) to input messages to said message management system (14) and obtain an allocation of messaging slots based on availability starting from a lowest tier with unallocated messaging slots and progressing to higher tiers.

**14.** The system of claim 13, further comprising infrastructure coupled to said message management system to enable delivery of messages from the information providers to recipients' telecommunications devices (16A, 16B), said messages being entered via said interface in accordance with the allocation of said messaging slots.

**15.** The system of claim 13 or claim 14, wherein the recipients are partitioned into a plurality of target profile groups and a set of a plurality of tiers is defined for each of the target profile groups, the allocation of messages in the tiers for each target profile group being independent of one another.

**16.** The system of any one of claim 13 to claim 15, wherein said message management system (14) is arranged to determine the total number of available messages in consideration of the number of messages permitted to be delivered to each recipient in a given period of time, a specified delivery priority, the total number of recipients and a predetermined time period for the message delivery campaign.

**17.** The system of claim 16, wherein a percentage of message inventory is assigned to each tier by an operator of said message management system (14), the number of messages in each tier being determined by multiplying the percentage by the total amount of available messages.

**18.** The system of any one of claim 13 to claim 17, wherein said interface is formed to enable each information provider (12) to at least one of:

select a target profile group of recipients to receive messages;

select one or more parameters relating to the time of delivery of messages; and

perform either a message delivery campaign based on a budget or on delivery of a desired number of messages.

**19.** The system of claim 18, wherein when an information provider (12) elects to perform a message delivery campaign based on delivery of a desired number of messages, said message management system (14) is arranged to allocate to each information provider (12), available messaging slots from a lowest one of the tiers having unallocated messaging slots, and then provide the cost of the messaging slots to the information provider via said interface.

**20.** The system of claim 18, wherein when an information provider (12) elects to perform a message delivery campaign based on a budget, said message management system (14) is arranged to allocate to each information provider (12), available messaging slots from a lowest one of the tiers having unallocated messaging slots until the cost of the messages equals the budget, and then provide the number of messaging slots to the information provider (12) via said interface.

**21.** The system of any one of claim 13 to claim 20, wherein the number of tiers is 2, 3, 4 or 5.

**22.** A computer program, or a suite of computer programs, comprising a set of instructions to cause a computer, or a suite of computers, to perform the method according to any one of claim 1 to claim 12.

**23.** A computer readable carrier comprising the computer program according to claim 22.

FIG. 1

| Campaign management | | | Logged in SoftDrink1 LTD |
|---|---|---|---|
| Campaign | Profile | Pricing | Schedule |

SoftDrink1 is good.

| Campaign management | | | Logged in SoftDrink1 LTD |
|---|---|---|---|
| Campaign | Profile | Pricing | Schedule |

Male/Female
Age
State
City
Interests

Total target size 12M
Segmented target size 100k

| Campaign management | | | Logged in SoftDrink1 LTD |
|---|---|---|---|
| Campaign | Profile | Pricing | Schedule |

| Size of campaign | 40k | |
|---|---|---|
| Tier 1 | $0.2 | 0 | $0 |
| Tier 2 | $0.1 | 0 | $0 |
| Tier 3 | $0.05 | 40k | $2000 |
| | | Total | $2000 |

| Campaign management | | | Logged in SoftDrink1 LTD |
|---|---|---|---|
| Campaign | Profile | Pricing | Schedule |

Start date

End date

AM/PM

Days

Available target size 12M
Available segmented size 100k

## FIG. 2

| Campaign management | | | Logged in SoftDrink1 LTD |
|---|---|---|---|
| Campaign | Profile | Pricing | Schedule |

SoftDrink1 is good.

---

| Campaign management | | | Logged in SoftDrink1 LTD |
|---|---|---|---|
| Campaign | Profile | Pricing | Schedule |

Male/Female
Age
State
City
Interests

Total target size 12M
Segmented target size 100k

---

| Campaign management | | | Logged in SoftDrink1 LTD |
|---|---|---|---|
| Campaign | Profile | Pricing | Schedule |

| Size of campaign | 40k | |
|---|---|---|
| Tier 1 | $0.2 | 0 | $0 |
| Tier 2 | $0.1 | 0 | $0 |
| Tier 3 | $0.05 | 40k | $2000 |
| | | Total | $2000 |

---

| Campaign management | | | Logged in SoftDrink1 LTD |
|---|---|---|---|
| Campaign | Profile | Pricing | Schedule |

Start date

End date

AM/PM

Days

Available target size 12M
Available segmented size 100k

## FIG. 3

| Campaign management | Logged in SoftDrink2 LTD |
|---|---|

| Campaign | Profile | Pricing | Schedule |
|---|---|---|---|

SoftDrink2 is it.

---

| Campaign management | Logged in SoftDrink2 LTD |
|---|---|

| Campaign | Profile | Pricing | Schedule |
|---|---|---|---|

Male/Female
Age
State
City
Interests

Total target size 12M
Segmented target size 100k

---

| Campaign management | Logged in SoftDrink2 LTD |
|---|---|

| Campaign | Profile | Pricing | Schedule |
|---|---|---|---|

| Size of campaign | 30k | | |
|---|---|---|---|
| Tier 1 | $0.2 | 0 | $0 |
| Tier 2 | $0.1 | 20k | $2000 |
| Tier 3 | $0.05 | 10k | $500 |
| | | Total | $2500 |

---

| Campaign management | Logged in SoftDrink2 LTD |
|---|---|

| Campaign | Profile | Pricing | Schedule |
|---|---|---|---|

Start date

End date

AM/PM

Days

Available target size        12M
Available segmented size 60k

*FIG. 3 CONT'D*

| Campaign management | Logged in SoftDrink3 LTD |
|---|---|

| Campaign | Profile | Pricing | Schedule |
|---|---|---|---|

SoftDrink3 is best.

| Campaign management | Logged in SoftDrink3 LTD |
|---|---|

| Campaign | Profile | Pricing | Schedule |
|---|---|---|---|

Male/Female
Age
State
City
Interests

Total target size 12M
Segmented target size 100k

| Campaign management | Logged in SoftDrink3 LTD |
|---|---|

| Campaign | Profile | Pricing | Schedule |
|---|---|---|---|

| Size of campaign | 15k | |
|---|---|---|
| Tier 1 | $0.2 | 5k | $1000 |
| Tier 2 | $0.1 | 10k | $1000 |
| Tier 3 | $0.05 | 0 | $0 |
| | | Total | $2000 |

| Campaign management | Logged in SoftDrink3 LTD |
|---|---|

| Campaign | Profile | Pricing | Schedule |
|---|---|---|---|

Start date

End date

AM/PM

Days

Available target size          12M
Available segmented size 30k

# FIG. 3 CONT'D

| Campaign management | Logged in SoftDrink1 LTD | | |
|---|---|---|---|
| Campaign | Profile | Pricing | Schedule |

| Budget of campaign | $3000 | |
|---|---|---|
| Tier 1 | $0.2 | $0 | 0 |
| Tier 2 | $0.1 | $500 | 5000 |
| Tier 3 | $0.05 | $2500 | 50 000 |
| | | Total | 55 000 |

| Campaign management | Logged in SoftDrink2 LTD | | |
|---|---|---|---|
| Campaign | Profile | Pricing | Schedule |

| Budget of campaign | | |
|---|---|---|
| Tier 1 | $0.2 | $500 | 1000 |
| Tier 2 | $0.1 | $2500 | 25 000 |
| Tier 3 | $0.05 | $0 | 0 |
| | | Total | 26 000 |

| Campaign management | Logged in SoftDrink3 LTD | | |
|---|---|---|---|
| Campaign | Profile | Pricing | Schedule |

| Budget of campaign | $2000 | |
|---|---|---|
| Tier 1 | $0.2 | $3000 | 15 000 |
| Tier 2 | $0.1 | $0 | 0 |
| Tier 3 | $0.05 | $0 | 0 |
| | | Total | 15 000 |

*FIG. 4*

EP 1 970 850 A1

**European Patent Office**

## EUROPEAN SEARCH REPORT

Application Number

EP 08 10 1394

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | The technical aspects identified in the present application (Art. 92 EPC) are considered part of common general knowledge. Due to their notoriety no documentary evidence is found to be required. For further details see the accompanying Opinion and the reference below. XP002456252 | 1-23 | INV. G06Q30/00 |
| | ----- | | |
| | | | TECHNICAL FIELDS SEARCHED (IPC) |
| | | | G06Q |

The present search report has been drawn up for all claims

| Place of search | Date of completion of the search | Examiner |
|---|---|---|
| The Hague | 16 June 2008 | Bohner, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)